(19) Europäisches Patentamt
European Patent Office
Office européen des brevets

(11) **EP 3 316 501 A2**

(12) **EUROPEAN PATENT APPLICATION**

(43) Date of publication:
**02.05.2018 Bulletin 2018/18**

(51) Int Cl.:
***H04J 11/00*** *(2006.01)* ***H04L 25/03*** *(2006.01)*

(21) Application number: **17195418.3**

(22) Date of filing: **09.10.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.10.2016 US 201615288052**

(71) Applicant: **Alcatel-Lucent USA Inc.**
**Murray Hill, NJ 07974-0636 (US)**

(72) Inventors:
• **BALACHANDRAN, Krishna**
**Morganville, NJ 07751 (US)**
• **KANG, Joseph**
**Belle Mead, NJ 08502 (US)**
• **KARAKAYALI, Kemal**
**Hoboken, NJ 07030 (US)**
• **REGE, Kiran**
**Marlboro, NJ 07746 (US)**

(74) Representative: **DREISS Patentanwälte PartG mbB**
**Friedrichstrasse 6**
**70174 Stuttgart (DE)**

(54) **DIRTY PAPER CODING IN WIRELESS NETWORKS**

(57) The present disclosure generally discloses an interference mitigation capability. The present disclosure discloses use of dirty paper coding in a wireless communication network in order to mitigate interference in the wireless communication network. The wireless communication network may be a heterogeneous wireless communication network, where heterogeneity may be based on wireless access device technology type, wireless access device transmit power, or the like. For example, the wireless communication network may be a heterogeneous wireless communication network including a first type of wireless access device (e.g., a small cell device, such as a metro cell, microcell, picocell, femtocell, or the like) and a second type of wireless access device (e.g., a large cell device, such as a macro cell), where the first type of wireless access device is configured to use dirty paper coding to mitigate interference from the second type of wireless access device.

## Description

TECHNICAL FIELD

The present disclosure relates generally to wireless communication networks and, more particularly but not exclusively, to interference mitigation in wireless communication networks.

BACKGROUND

The continued growth of bandwidth-hungry applications, coupled with expectations by users that these applications should be accessible anywhere, has resulted in an exponential growth in the amount of traffic carried by wireless cellular networks, thereby straining the capacity of cellular wireless networks. While adding spectrum to the cellular wireless networks will certainly alleviate the capacity problems, this option is not always available to the wireless service providers. In the absence of availability of additional spectrum, wireless service providers typically turn to increasing the density of base stations of the cellular wireless networks, effectively splitting the cellular wireless networks into finer cells. This is often done by deploying metro cells within the coverage areas of the macro cells already deployed by the wireless service providers. If these metro cells are placed in locations where they can be accessed by a large number of users, they have the potential to help offload significant amounts of traffic from the overloaded macro cells, thereby alleviating the capacity problems. However, while the deployment of such metro cells has the potential to offload traffic from the overloaded macro cells, various deployment constraints associated with deploying such metro cells may limit the effectiveness of the metro cells in offloading traffic from the overloaded macro cells.

SUMMARY

The present disclosure generally discloses use of dirty paper coding in a wireless network.

In at least some embodiments, an apparatus is provided. The apparatus includes a processor and a memory communicatively connected to the processor. The processor is configured to receive, by a first wireless access device from a wireless end device associated with the first wireless access device, feedback information including information indicative of channel estimate information for a channel between the wireless end device and the first wireless access device and information indicative of channel estimate information for a channel between the wireless end device and a second wireless access device. The processor is configured to receive, by the first wireless access device from the second wireless access device, information indicative of a transmit sequence to be transmitted by the second wireless access device using a set of wireless resources. The processor is configured to determine, by the first wireless access device using a dirty paper coding scheme and based on the feedback information and the information indicative of the transmit sequence to be transmitted by the second wireless access device, a transmit sequence for transmission by the first wireless access device toward the wireless end device using the set of wireless resources. The processor is configured to transmit the transmit sequence toward the wireless end device using the set of wireless resources.

In at least some embodiments, an apparatus is provided. The apparatus includes a processor and a memory communicatively connected to the processor. The processor is configured to determine, by a wireless end device connected to a first wireless access device, feedback information including information indicative of channel estimate information for a channel between the wireless end device and the first wireless access device and information indicative of channel estimate information for a channel between the wireless end device and a second wireless access device. The processor is configured to send the feedback information from the wireless end device toward the first wireless access device. The processor is configured to receive, by the wireless end device from the first wireless access device, a wireless receive sequence.

In at least some embodiments, an apparatus is provided. The apparatus includes a processor and a memory communicatively connected to the processor. The processor is configured to receive, at a first wireless access device from a second wireless access device, a request for information indicative of a transmit sequence to be transmitted by the first wireless access device using a set of wireless resources. The processor is configured to send, from the first wireless access device toward the second wireless access device, a response including the information indicative of the transmit sequence to be transmitted by the first wireless access device using the set of wireless resources.

BRIEF DESCRIPTION OF THE DRAWINGS

The teachings herein can be readily understood by considering the following detailed description in conjunction with the accompanying drawings, in which:

FIG. 1 depicts an exemplary heterogeneous wireless communication system for illustrating use of dirty paper coding by a small cell wireless access device to mitigate interference of large cell wireless access devices;

FIG. 2 depicts a high level block diagram of a dirty paper coding scheme for use by the small cell wireless access device of FIG. 1;

FIGs. 3A - 3B depict high level block diagrams of a transmitter and a receiver configured to use a specific dirty paper coding scheme based on the dirty paper coding scheme of FIG. 2;

FIG. 4 depicts an example of use of dirty paper coding by a given wireless access device to mitigate interference of other wireless access devices when the given wireless access device is communicating with a wireless end device;

FIG. 5 depicts an embodiment of a method for use by a small cell wireless access device to mitigate interference of a large cell wireless access device based on dirty paper coding;

FIG. 6 depicts an embodiment of a method for use by a wireless end device in supporting use of dirty paper coding by a small cell wireless access device to mitigate interference of a large cell wireless access device;

FIG. 7 depicts an embodiment of a method for use by a large cell wireless access device in supporting use of dirty paper coding by a small cell wireless access device to mitigate interference of the large cell wireless access device; and

FIG. 8 depicts a high-level block diagram of a computer suitable for use in performing various functions described herein.

To facilitate understanding, identical reference numerals have been used, where possible, to designate identical elements that are common to the figures.

DETAILED DESCRIPTION

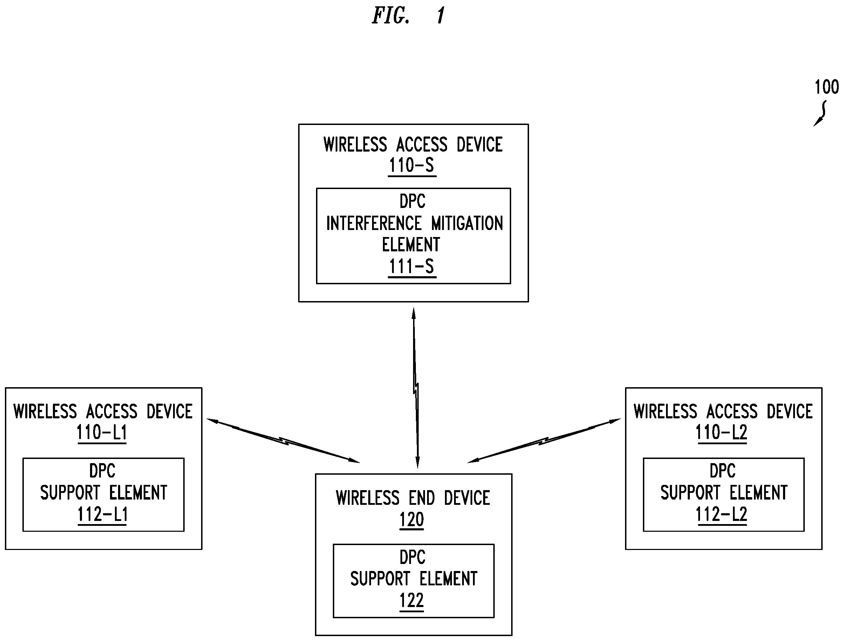

The present disclosure generally discloses an interference mitigation capability. The present disclosure discloses use of dirty paper coding in a wireless communication network in order to mitigate interference in the wireless communication network. The wireless communication network may be a heterogeneous wireless communication network, where heterogeneity may be based on wireless access device technology type, wireless access device transmit power, or the like. For example, the wireless communication network may be a heterogeneous wireless communication network including a first type of wireless access device (e.g., a small cell device, such as a metro cell, microcell, picocell, femtocell, or the like) and a second type of wireless access device (e.g., a large cell device, such as a macro cell), where the first type of wireless access device is configured to use dirty paper coding to mitigate interference from the second type of wireless access device. These and various other embodiments and advantages of the interference mitigation capability may be further understood by way of reference to the exemplary heterogeneous wireless communication system of FIG. 1.

FIG. 1 depicts an exemplary heterogeneous wireless communication system for illustrating use of dirty paper coding to mitigate interference of wireless access devices.

The heterogeneous wireless communication system 100 may be based on any suitable wireless communications technologies. The heterogeneous wireless communication system 100 may include a primary communications system or capability and a secondary communications system or capability (e.g., to increase coverage, improve service, or the like). The primary and secondary communication systems or capabilities may be based on different wireless technologies or may be based on a common wireless technology. For example, the primary communications system or capability may be a cellular-based communication system, such as a Third Generation (3G) Universal Mobile for Telecommunications System (UMTS) wireless communications system, a Fourth Generation (4G) Long Term Evolution (LTE) wireless communications system, a Fifth Generation (5G) wireless communications system, or the like, as well as various combinations thereof. For example, the secondary communications system or capability may be based on various types of wireless communications technologies, such as small cell wireless communications technologies or the like. It is noted that the heterogeneous wireless communication system 100 may be based on other types of wireless communications technologies. It is further noted that the heterogeneity of heterogeneous wireless communication system 100 may be based on one or more of wireless access device technology type, wireless access device transmit power, or the like, as well as various combinations thereof.

The heterogeneous wireless communication system 100 includes a set of wireless access devices (WADs) 110 and a wireless end device (WED) 120.

The WADs 110 are wireless access devices configured to operate as points of wireless access for wireless end devices (illustratively, WED 120). The WADs include two WADs 110-L1 and 110-L2 (collectively, WADs 110-L) of a first WAD type and a WAD 110-S of a second WAD type. The WADs 110-L of the first WAD type may be large cell wireless access devices (e.g., macro cells). The WAD 110-S of the second WAD type may be a small cell wireless access device (e.g., a metro cell, a microcell, a picocell, a femtocell, or the like). The WADs 110 may be deployed at various geographic locations with respect to each other. It will be appreciated that the set of WADs 110 may include fewer or more WADs 110 (including fewer or more WAD 110-Ls or fewer or more WAD 110-Ss), that the WADs 110 may be arranged in various other arrangements with respect to each other, or the like, as well as various combinations thereof. The typical operation of wireless access devices in supporting wireless communications of wireless end devices will be understood.

The WED 120 may be any suitable type of wireless device which may communicate wirelessly via WADs 110. The WED 120 may be configured to attach to one of the WADs 110 for wireless communication via that WAD 110. The WED 120 may be configured to receive information from a WAD 110 via a wireless downlink (DL) and to transmit information to a WAD 110 via a wireless uplink (UL). It will be appreciated the DL and UL may include various wireless resources configured to support communications of WED 120 and other WEDs (omitted for purposes of clarity), where the manner in which such wireless resources are defined and arranged may vary for different types of wireless communication networks (e.g., 4G LTE, 5G, or the like). The WED 120 may be a fixed wireless device or a mobile wireless device. For example, WED 120 may be a wireless end device of a user (e.g., a smartphone, a tablet, a laptop computer, or the like), a wireless end device supporting automated communications (e.g., a wireless machine-type-communication (MTC) device, an Internet-of-Things (IoT) device, or the like), or the like. The typical operation of wireless end devices in communicating via wireless access devices will be understood.

The WADs 110 and WED 120 may be configured to cooperate to support use of dirty paper coding techniques to mitigate interference within heterogeneous wireless communication system 100.

The WAD 110-S includes a DPC interference mitigation element 111-S. The DPC interference mitigation element 111-S (and, thus, WAD 110-S) is configured to mitigate interference from one or more of the WADs 110-L when communicating with the WED 120.

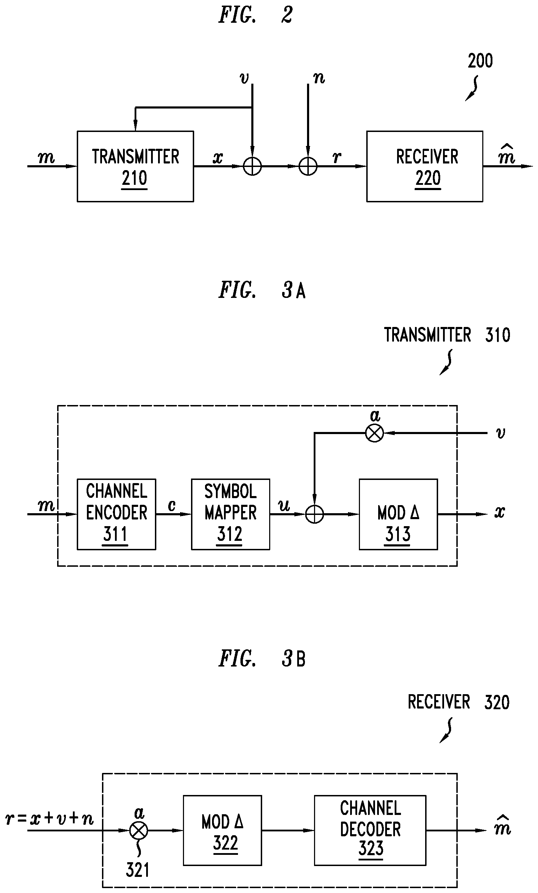

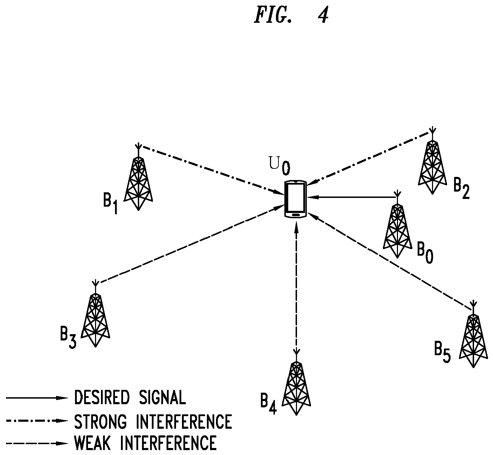

The DPC interference mitigation element 111-S may be configured to determine, for the WED 120, whether or not to apply DPC in order to mitigate interference from one or more of WADs 110-L when communicating with WED 120. The DPC interference mitigation element 111-S may be configured to determine whether or not to apply DPC when communicating with the WED 120 based on interference indicative information that is indicative as to the amount of interference that is experienced at WED 120 from the WADs 110-L. The DPC interference mitigation element 111-S may receive the interference indicative information for the WADs 110-L from the WED 120. The WED 120 may determine the interference indicative information of the WADs 110-L1 and 110-L2 based on processing of reference signals (RSs) received from the WADs 110-L1 and 110-L2, respectively. The WED 120 may determine and report the interference indicative information of the WADs 110-L in the form of one or more of Reference Signal Received Power (RSRP) values, Reference Signal Strength Indicator (RSSI) values, Reference Signal Received Quality (RSRQ) values, or the like. The DPC interference mitigation element 111-S may receive the interference indicative information for the WADs 110-L from the WED 120 and determine, for each of the WADs 110-L, whether or not interference of the respective WAD 110-L is to be mitigated based on DPC. The DPC interference mitigation element 111-S may determine, for a given WAD 110-L based on the interference indicative information for the given WAD 110-L, whether or not interference of the given WAD 110-L is to be mitigated based on DPC based on a determination as to whether interference experienced by the WED 120 from the given WAD 110-L is above a threshold. For example, for a given interference threshold, if interference experienced by the WED 120 from the WAD 110-L1 is above the threshold and interference experienced by the WED 120 from the WAD 110-L2 also is above the threshold, then DPC interference mitigation element 111-S may apply DPC for mitigation of the interference from WAD 110-L1 and WAD 110-L2 when transmitting to WED 120. Similarly, for example, for a given interference threshold, if interference experienced by the WED 120 from the WAD 110-L1 is above the threshold and interference experienced by the WED 120 from the WAD 110-L2 is below the threshold, then DPC interference mitigation element 111-S may only apply DPC for mitigation of the interference from WAD 110-L1 when transmitting to WED 120. Similarly, for example, for a given interference threshold, if interference experienced by the WED 120 from the WAD 110-L2 is below the threshold and interference experienced by the WED 120 from the WAD 110-L2 also is below the threshold, then DPC interference mitigation element 111-S may determine that DPC does not need to be applied when transmitting to WED 120. The DPC interference mitigation element 111-S may be configured to dynamically activate and deactivate use of DPC, over various time scales (e.g., per resource block, per subframe, per frame, or the like) as the interference from the WADs 110-L1 and 110-L2 changes (e.g., as the interference indicative information that is determined and reported by the WED 120 for the WADs 110-L1 and 110-L2 changes). It is noted that the DPC interference mitigation element 111-S also may be configured to determine whether or not interference of a given WAD 110-L is to be mitigated for the WED 120 based on DPC based on other information available to DPC interference mitigation element 111-S, such as whether or not the given WAD 110-L is scheduled to transmit when the WAD 110-S transmits to the WED 120 (e.g., even though the interference measured by the WED 120 for the given WAD 110-L is above an interference threshold, the DPC interference mitigation element 111-S may determine that mitigation of this interference of the given WAD 110-L is not necessary since the given WAD 110-L is not scheduled to transmit when the WAD 110-S transmits to the WED 120). The operation of the DPC interference mitigation element 111-S of the WAD 110-S in determining, for the WED 120, whether or not to apply DPC in order to mitigate interference from one or more of WADs 110-L when communicating with WED 120 may be further understood by way of reference to the DPC elements of FIGs. 2 and 3A - 3B and the method of FIG. 4.

The DPC interference mitigation element 111-S is configured to mitigate interference from the one or more of the WADs 110-L based on use of DPC, which may be further understood by way of reference to FIG. 2. The DPC interference mitigation element 111-S of the WAD 110-S is configured to use DPC to mitigate interference from one or more of the WADs 110-L, when communicating with the WED 120, based on information that is received from the WED 120 for which interference mitigation is provided and based on information that is received from the one or more of the WADs 110-L for which interference is mitigated. The information received from the WED 120 for which interference mitigation is provided, as discussed further below, may include information which may be used for interference mitigation based on DPC (which also may be referred to herein as WED DPC information), such as information indicative of channel estimate information for a channel between the WED 120 and WAD 110-S, information indicative of channel estimate information for a channel(s) between the WED 120 and one or more WADs 110-L for which interference can be mitigated, a strength of the sum of noise and uncancelled interference at the WED 120, or the like, as well as various combinations thereof. The information received from the one or more of the WADs 110-L for which interference is mitigated, which may be requested by the DPC interference mitigation element 111-S from the one or more of the WADs 110-L for which interference is mitigated, may include the transmit sequences to be sent by the one or more of the WADs 110-L for which interference is mitigated (during the time when WAD 110-S will be transmitting to the WED 120 and, therefore, also during the time for which interference mitigation is to be provided). The DPC interference mitigation element 111-S of the WAD 110-S may be configured to use various types of DPC schemes in order to mitigate interference from WADs 110-L. In at least some embodiments, for example, DPC interference mitigation element 111-S of the WAD 110-S may be configured to mitigate interference from WADs 110-L using a version of DPC that is referred to as Tomlinson-Harashima Precoding - Partial Interference Pre-subtraction (THP-PIP), which may be further understood by way of reference to FIGs. 2 and 3A - 3B. It will be appreciated, as noted above, that various other versions of DPC may be applied by the DPC interference mitigation element 111-S of the WAD 110-S in order to mitigate interference from WADs 110-L when communicating with WED 120. The operation of the DPC interference mitigation element 111-S of the WAD 110-S in mitigating interference when communicating with WED 120 may be further understood by way of reference to the DPC elements of FIGs. 2 and 3A - 3B and the method of FIG. 4.

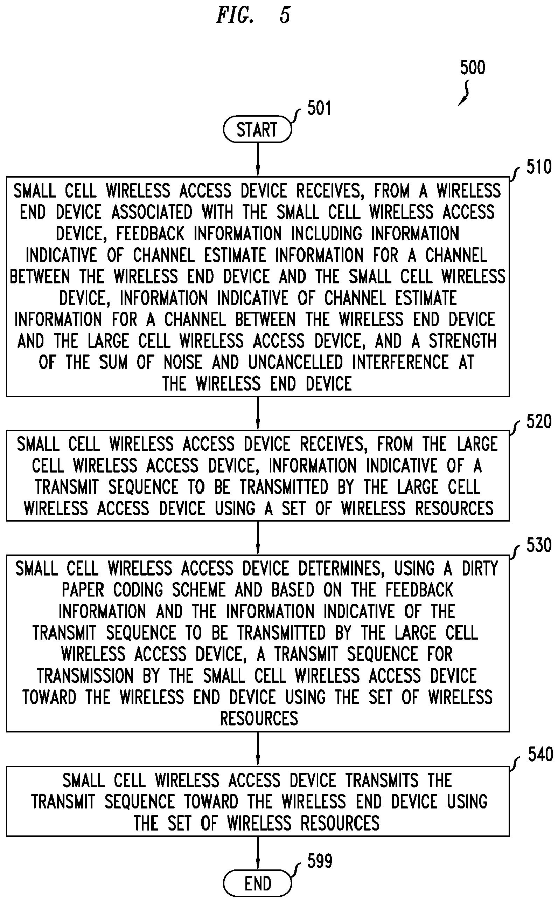

The WADs 110-L1 and 110-L2 include DPC support elements 112-L1 and 112-L2 (collectively, DPC support elements 112-L), respectively. The DPC support elements 112-L1 and 112-L2 of the WADs 110-L1 and L2 are configured to provide the DPC interference mitigation element 111-S of the WAD 110-S with information for use in mitigating interference from WADs 110-L1 and 110-L2, respectively, based on DPC. The operation of the DPC support elements 112-L1 and 112-L2 of the WADs 110-L1 and L2 may be further understood by way of reference to the DPC elements of FIGs. 2 and 3A - 3B (e.g., in terms of DPC input information provided by wireless access devices whose interference is to be mitigated) and the method of FIG. 5.

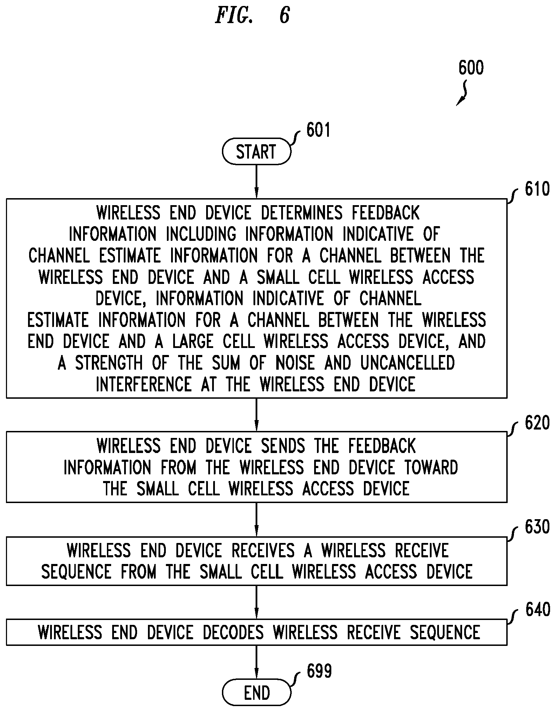

The WED 120 includes a DPC support element 122. The DPC support element 122 of the WED 120 is configured to provide the DPC interference mitigation element 111-S of the WAD 110-S with information for use in mitigating interference from one or more of the WADs 110-L based on DPC. The operation of the DPC support element 122 of the WED 120 may be further understood by way of reference to the DPC elements of FIGs. 2 and 3A - 3B (e.g., in terms of DPC input information provided by a wireless device for which interference mitigation is to be provided) and the method of FIG. 6.

FIG. 2 depicts a high level block diagram of a dirty paper coding scheme for use by the small cell wireless access device of FIG. 1. In general, dirty paper coding (DPC) is an information theoretic result that provides a mechanism for mitigating interference in wireless systems. As depicted in FIG. 2, DPC may be used to mitigate interference when a transmitter 210 transmits to a receiver 220. In FIG. 2, $m$ denotes the information sequence to be transmitted by the transmitter 201 to the receiver 220 and $x$ represents the transmit vector that is actually transmitted by the transmitter 201 to the receiver 220. The received vector $r$ is corrupted by channel noise $n$ and interference $v$. The key element of the DPC setting is that the interference $v$ is known non-causally to the transmitter. The DPC result essentially states that, in the setting of FIG. 2, it is possible to construct a coding scheme such that the error performance would be similar to the error performance that can be achieved over the same channel in the absence of the interference. In other words, if a certain transmit energy is needed to achieve some desired performance over the channel in the absence of the interference, it is possible to achieve the same performance at the same transmit energy level in the presence of the interference. This information theoretical result may be implemented in a number of ways, many of which are quite complex as they may be designed to approach the theoretical limit established by the DPC result. This makes many such schemes unsuited for implementation in a practical wireless system. However, there are also some fairly effective non-complex DPC schemes. One such scheme, as noted above, involves Tomlinson-Harashima Precoding in combination with Partial Interference Pre-subtraction (denoted as THP-PIP). This scheme is relatively simple to implement, and, if paired with a suitable channel code, can be highly effective in mitigating interference. Thus, in at least some embodiments, a THP-PIP DPC scheme employing low-density parity check (LDPC) codes may be employed by small cell devices to mitigate interference from more dominant large cell devices, thereby leading to significant improvements in user data rates in co-channel heterogeneous wireless networks.

FIGs. 3A - 3B depict high level block diagrams of a transmitter and a receiver configured to use a specific dirty paper coding scheme based on the dirty paper coding scheme of FIG. 2.

FIGs. 3A and 3B depict high level block diagrams of a transmitter 310 (which may correspond to the transmitter 210 of FIG. 2) and a receiver 320 (which may correspond to the receiver 220 of FIG. 2), respectively, that are configured to support use of THP-PIP dirty paper coding for communication via a wireless channel between the transmitter 310 and the receiver 320. For example, the transmitter 310 may be implemented within WAD 110-S of FIG. 1 and the receiver 320 may be implemented within the WED 120 of FIG. 1, thereby enabling WAD 110-S to mitigate interference from one or more of the WADs 120-L when transmitting to WED 120.

FIG. 3A depicts a high-level block diagram of the transmitter 310 which, as noted above, is configured to support use of THP-PIP dirty paper coding to support mitigation of interference when transmitting to receiver 320. The transmitter 310 includes a channel encoder 311, a symbol mapper 312, and a mod-Δ element 313. Here, assume that a binary information sequence *m* is to be transmitted over the channel. This transmission is to take place in the presence of the interference vector *v* that is known non-causally to the transmitter. The channel also adds noise *n* to the transmitted signal. The channel encoder 311, using a suitable error correcting code, encodes the information *sequence m* to produce the code word c. The symbol mapper 312 divides the code word c into groups of *b* bits, and maps these groups to points in a suitably chosen signal constellation, producing the code vector *u*. The transmit vector *x* is then produced by subtracting $\alpha v$ from *u* and applying the modulo-Δ operation to the difference as follows: $x = \mathrm{mod}(u - \alpha v, \Delta)$, where $\mathrm{mod}(y, \Delta)$ represents the modulo-Δ operation that limits the range of the argument *y* to $(-\Delta/2, +\Delta/2]$ by subtracting from it a suitable multiple of Δ, and $\alpha$ is a scaling factor. A commonly used value for $\alpha$ is $P/(P+\sigma^2)$ where *P* is the average per-symbol transmit energy and $\sigma^2$ is the average per-symbol noise energy.

FIG. 3B depicts a high-level block diagram of the receiver 320 which, as noted above, is configured to support use of THP-PIP dirty paper coding to support mitigation of interference when receiving from transmitter 310. The receiver 320 includes a multiplier 321, a mod-Δ element 322, and a channel decoder 323. The receiver 320 receives the received vector *r* (which as indicated above, is $r = x + v + n$). The multiplier 321 multiplies the received vector *r* by the scaling factor $\alpha$. The mod-Δ element 322 applies the modulo-Δ operation to the scaled vector $\alpha r$ and provides the resulting vector of symbols to the channel decoder 323 (which, it will be appreciated, is associated with the channel code that was used by the transmitter 310). Here, for purposes of clarity, it is assumed that the channel code is an LDPC code (e.g., LDPC codes are Linear Block Codes (LBCs) with a sparse parity check matrix H, and have been known to be highly efficient in that they perform close to the theoretical limit in AWGN channels); however, it will be appreciated that any suitable channel code may be used to construct a THP-PIP DPC scheme. The channel decoder 323 outputs the resulting vector of symbols *m'*.

In general, implementing DPC involves imposing an order - specifically, the wireless access devices whose interference is sought to be mitigated construct their transmit sequences first and, only after these transmit sequences have been determined, does the wireless access device that is implementing DPC determine its own transmit sequence. As a result, users associated with the latter (i.e., the wireless access device that is implementing DPC) benefit from interference reduction while users associated with the former (i.e., wireless access devices that determine their transmit sequences first) do not benefit from interference reduction. It will be appreciated that such an order, and its associated consequences, are well-suited for the natural hierarchy of a co-channel heterogeneous wireless network where the major problem is the interference caused by large cell devices to small cell devices whereas the small cell devices do not cause much interference to the users of the large cell devices or to the users of other small cell devices unless deployed in extremely dense patterns. In view of the foregoing, in at least some embodiments, small cell devices may be configured to use DPC (e.g., THP-PIP DPC) in order to mitigate the interference experienced by their users from nearby large cell devices. In at least some embodiments, at least some small cell devices use DPC to mitigate the interference that their users experience from the K strongest large cell devices, whereas the large cell devices communicate with their users without using DPC. The use of DPC in this manner may be further understood by considering the example of FIG. 4.

FIG. 4 depicts an example of use of dirty paper coding by a given wireless access device to mitigate interference of other wireless access devices when the given wireless access device is communicating with a wireless end device.

In the example of FIG. 4, a wireless end device (which is denoted as $U_0$) is communicating with a wireless access device (which is denoted as $B_0$) within the presence of five other wireless access devices (which are denoted as $B_1$, $B_2$, $B_3$, $B_4$, and $B_5$). The signal received by wireless end device $U_0$ is given by $r_0 = \sum_0^5 h_k x_k + n_0$, where, for $k = 0, 1, ..., 5$, $h_k$ denotes the channel vector between wireless access device $B_k$ and wireless end device $U_0$, $x_k$ denotes the complex symbol transmitted by wireless access device $k$, and $n_0$ denotes the noise vector at the receive antennas of wireless end device $U_0$. Here, from the perspective of wireless end device $U_0$, the signals transmitted by wireless access devices $B_1$ through $B_5$ constitute interference. For purposes of clarity, assume that, among these interfering signals transmitted by wireless access devices $B_1$ through $B_5$, those transmitted by wireless access devices $B_1$ and $B_2$ are significantly stronger than those transmitted by wireless access devices $B_3$ through $B_5$, and, further, that wireless access device $B_0$ wants to implement DPC to mitigate these stronger interfering signals of wireless access devices $B_1$ and $B_2$. Here, the interference caused by wireless access devices $B_3$, $B_4$ and $B_5$ is uncancelled interference. Let $w_0$ denote the M-dimensional filter vector used by wireless end device $U_0$ to obtain an estimate of the symbol transmitted by wireless access device $B_0$. Here, M denotes the number of receive antennas at the wireless end device $U_0$. Then, the estimate of the desired signal, from the perspective of wireless end device $U_0$, can be written as:

$$\widehat{x}_0 = w_0^\dagger h_0 \left[ x_0 + (w_0^\dagger h_1 x_1)/(w_0^\dagger h_0) + (w_0^\dagger h_2 x_2)/ \quad (w_0^\dagger h_0) + (w_0^\dagger \widetilde{n}_0)/(w_0^\dagger h_0) \right],$$

where the quantity inside the square brackets represents the received signal at wireless end device $U_0$ "reflected" to the corresponding transmitter (namely that associated with wireless access device $B_0$). The quantity $\widetilde{n}_0$ denotes the sum of thermal noise and uncancelled interference. Mapping the terms inside the square brackets in to those that characterize the DPC scheme shown in FIGs. 3A and 3B, the term $x_0$ corresponds to the transmit symbol "$x$" that the DPC encoder produces, the sum $"(w_0^\dagger h_1 x_1)/(w_0^\dagger h_0) + (w_0^\dagger h_2 x_2)/ (w_0^\dagger h_0)"$ corresponds to the non-causally known interference "$v$" that the encoder tries to mitigate, and the term $"(w_0^\dagger \widetilde{n}_0)/(w_0^\dagger h_0)"$ corresponds to the additive channel noise "$n$" that the encoder has no knowledge of except for its strength.

In the example of FIG. 4 (as will be appreciated from the discussion of FIG. 4 provided above), in order to implement THP-PIP DPC as presented with respect to FIG. 2 and FIGs. 3A and 3B, the encoder at wireless access device $B_0$ needs to know the following information: (1) channel estimate information (i.e., the product $w_0^\dagger h_0$) for the channel between the wireless end device $U_0$ (i.e., $h_0$) and itself and (2) channel estimate information (i.e., the products $w_0^\dagger h_1$ and $w_0^\dagger h_2$) for the channel(s) between the wireless end device $U_0$ and the wireless access device(s) whose interference is sought to be mitigated (i.e., $h_1$ and $h_2$ in this example), (3) the strength of the sum of the noise and uncancelled interference (i.e., $w_0^\dagger \widetilde{n}_0$), and (4) the symbol(s) transmitted by the wireless access device(s) whose interference is sought to be mitigated (i.e., $x_1$ and $x_2$ in this example). The wireless access device $B_0$ may obtain the channel estimate information (i.e., the products $w_0^\dagger h_0$, $w_0^\dagger h_1$, and $w_0^\dagger h_2$) by either (1) receiving the channel estimate information (i.e., the products $w_0^\dagger h_0$, $w_0^\dagger h_1$, and $w_0^\dagger h_2$) as feedback from the wireless end device $U_0$ (the products $w_0^\dagger h_0$, $w_0^\dagger h_1$, and $w_0^\dagger h_2$ are computed by the wireless end device $U_0$ using the estimated channel information (i.e., $h_0$, $h_1$ and $h_2$) and the filter vector $w_0$) or (2) receiving the estimated channel information (i.e., $h_0$, $h_1$ and $h_2$) as feedback from the wireless end device $U_0$, receiving the filter vector $w_0$ from the wireless end device $U_0$, and computing the channel estimate information (i.e., the products $w_0^\dagger h_0$, $w_0^\dagger h_1$, and $w_0^\dagger h_2$) as products of the estimated channel information (i.e., $h_0$, $h_1$ and $h_2$) and the filter vector $w_0$. It is noted that sending the channel estimate information (i.e., the products $w_0^\dagger h_0$, $w_0^\dagger h_1$, and $w_0^\dagger h_2$, which are scalar quantities) from the wireless end device $U_0$ to the wireless access device $B_0$ rather than sending the estimated channel information (i.e., $h_0$, $h_1$ and $h_2$, which are vectors) and the filter vector ($w_0$) from the from the wireless end device $U_0$ to the wireless access device $B_0$ (such that wireless end device $U_0$ computes the products $w_0^\dagger h_0$, $w_0^\dagger h_1$, and $w_0^\dagger h_2$) will reduce the load on the feedback channel from the wireless end device $U_0$ to the wireless access device $B_0$. The wireless access device $B_0$ receives the strength of the sum of the noise and uncancelled interference, specifically the quantity $w_0^\dagger \sigma^2 w_0$, where $\sigma^2$ denotes

the absolute mean square value of the sum of the noise and uncancelled interference at a receive antenna, as feedback from the wireless end device $U_0$. The wireless access device $B_0$ obtains the symbol(s) transmitted by the wireless access device(s) whose interference is sought to be mitigated (i.e., $x_1$ and $x_2$) from the wireless access device(s) whose interference is sought to be mitigated, respectively. The wireless access device $B_0$ may obtain the symbol(s) transmitted by the wireless access device(s) whose interference is sought to be mitigated (i.e., $x_1$ and $x_2$) by (1) receiving the symbol(s) transmitted by the wireless access device(s) whose interference is sought to be mitigated (i.e., $x_1$ and $x_2$) from the wireless access device(s) whose interference is sought to be mitigated or (2) receiving information indicative of the symbol(s) transmitted by the wireless access devices whose interference is sought to be mitigated (e.g., receiving the raw information bits to be transmitted and receiving information about the Modulation and Coding Scheme (MCS) to be applied by the wireless access devices to transmit the raw information bits) and locally constructing the symbol(s) transmitted by the wireless access device(s) whose interference is sought to be mitigated (i.e., $x_1$ and $x_2$) based on the information indicative of the symbol(s) transmitted by the wireless access devices whose interference is sought to be mitigated. The wireless access device $B_0$ may receive the feedback information from the wireless end device $U_0$ periodically or on demand (e.g., the wireless access device $B_0$ may request that the wireless end device $U_0$ provide the feedback information when the wireless access device $B_0$ is going to schedule a transmission to the wireless end device $U_0$), and may request the transmit symbol(s) from the wireless access devices whose interference is sought to be mitigated (i.e., $x_1$ and $x_2$) when the wireless access device $B_0$ is going to schedule a transmission to the wireless end device $U_0$.

FIG. 5 depicts an embodiment of a method for use by a small cell wireless access device to mitigate interference of a large cell wireless access device based on dirty paper coding. It will be appreciated that, although primarily presented as being performed serially, at least a portion of the blocks of method 500 may be performed contemporaneously or in a different order than as presented in FIG. 5.

At block 501, method 500 begins.

At block 510, the small cell wireless access device receives, from a wireless end device associated with the small cell wireless access device, feedback information. The feedback information includes information indicative of channel estimate information for a channel between the wireless end device and the small cell wireless access device and information indicative of channel estimate information for a channel between the wireless end device and the large cell wireless access device. The information indicative of the channel estimate information for a channel may include (1) the channel estimate information itself (i.e., the products $w_0^\dagger h_0$ and $w_0^\dagger h_1$) or (2) the estimated channel information (i.e., $h_0$ and $h_1$) and the filter vector $w_0$ such that the channel estimate information (again, the products $w_0^\dagger h_0$ and $w_0^\dagger h_1$) may be computed. The feedback information also includes a strength of the sum of noise and uncancelled interference at the wireless end device. The feedback information may include other types of information.

At block 520, the small cell wireless access device receives, from the large cell wireless access device, information indicative of a transmit sequence to be transmitted by the large cell wireless access device using a set of wireless resources. The information indicative of a transmit sequence to be transmitted by the large cell wireless access device using a set of wireless resources may include (1) the transmit sequence itself (i.e., the symbol(s) to be transmitted by the large cell wireless access device or (2) information which may be used to construct the transmit sequence (e.g., receiving the raw information bits to be transmitted and receiving information about the MCS to be applied by the wireless access devices to transmit the raw information bits).

At block 530, the small cell wireless access device determines, using a dirty paper coding scheme and based on the feedback information and the information indicative of the transmit sequence to be transmitted by the large cell wireless access device, a transmit sequence for transmission by the small cell wireless access device toward the wireless end device using the set of wireless resources.

At block 540, the small cell wireless access device transmits the transmit sequence toward the wireless end device using the set of wireless resources.

At block 599, method 500 ends.

FIG. 6 depicts an embodiment of a method for use by a wireless end device in supporting use of dirty paper coding by a small cell wireless access device to mitigate interference of a large cell wireless access device. It will be appreciated that, although primarily presented as being performed serially, at least a portion of the blocks of method 600 may be performed contemporaneously or in a different order than as presented in FIG. 6.

At block 601, method 600 begins.

At block 610, the wireless end device determines feedback information including information indicative of channel estimate information for a channel between the wireless end device and the small cell wireless access device, information indicative of channel estimate information for a channel between the wireless end device and the large cell wireless access device, and a strength of the sum of noise and uncancelled interference at the wireless end device.

At block 620, the wireless end device sends the feedback information from the wireless end device toward the small cell wireless access device.

At block 630, the wireless end device receives a receive sequence from the small cell wireless access device via a set of wireless resources. The wireless receive sequence includes (1) a transmit sequence determined by the small cell wireless access device (using a dirty paper coding scheme based on the feedback information) and transmitted by the small cell wireless access device using the set of wireless resources, (2) interference (including uncancelled interference), and (3) noise.

At step 640, the wireless end device decodes the wireless receive sequence. The wireless end device decodes the wireless receive sequence to extract the information bits transmitted by the small cell wireless access device using the set of wireless resources. The wireless end device may then handle the information bits, extracted based on decoding of the wireless receive sequence, in various ways (e.g., storing the information bits, further propagating the information bits, processing the information bits, or the like, as well as various combinations thereof).

At block 699, method 600 ends.

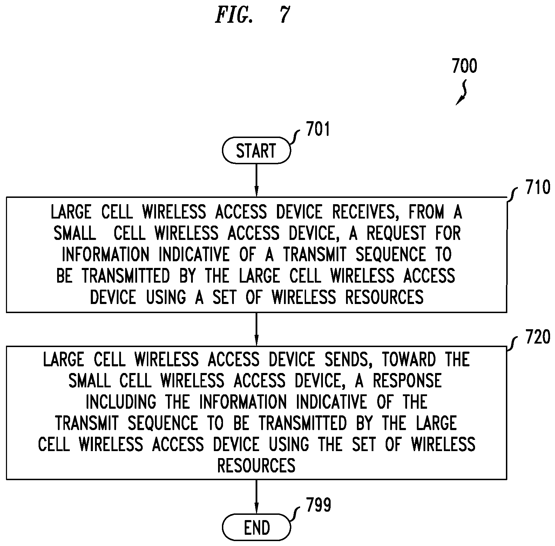

FIG. 7 depicts an embodiment of a method for use by a large cell wireless access device in supporting use of dirty paper coding by a small cell wireless access device to mitigate interference of the large cell wireless access device. It will be appreciated that, although primarily presented as being performed serially, at least a portion of the blocks of method 700 may be performed contemporaneously or in a different order than as presented in FIG. 7.

At block 701, method 700 begins.

At block 710, the large cell wireless access device receives, from the small cell wireless access device, a request for information indicative of a transmit sequence to be transmitted by the large cell wireless access device using a set of wireless resources.

At block 720, the large cell wireless access device sends, toward the small cell wireless access device, a response including the information indicative of the transmit sequence to be transmitted by the large cell wireless access device using the set of wireless resources.

At block 799, method 700 ends.

It is noted that DPC, while it may be applied in various contexts, is particularly well-suited for use within the context of a heterogeneous wireless network including large cell devices (e.g., macro cells) and small cell devices (e.g., metro cells). First, as indicated above, it may be applied to address major interference issues in co-channel heterogeneous wireless networks. However, it is also useful within this context for other reasons. For example, use of DPC within this context is based on the metro cells receiving channel estimates from the wireless user devices that they are serving, a process that involves some delays. In a dynamic environment, channels typically vary rapidly, which means that delays in reporting channel estimates can introduce significant errors in the channel estimates. However, metro cell users are typically static or exhibit low mobility, which means that their channels vary relatively slowly with time. As a result, even if there is a delay of a few milliseconds in reporting channel estimates, the channel estimates are likely to be quite accurate, thus making for a more effective DPC implementation.

Various embodiments of the dirty paper coding capabilities may provide various advantages or potential advantages. For example, various embodiments of the dirty paper coding capabilities may enable use of DPC in order to allow metro cells to mitigate most or all of the interference from macro cells without causing the macro cells to suffer loss of capacity. Various embodiments of the dirty paper coding capabilities may provide various other advantages or potential advantages.

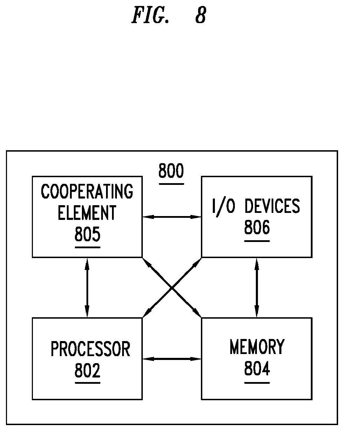

FIG. 8 depicts a high-level block diagram of a computer suitable for use in performing various functions presented herein.

The computer 800 includes a processor 802 (e.g., a central processing unit (CPU), a processor having a set of processor cores, a processor core of a processor, or the like) and a memory 804 (e.g., a random access memory (RAM), a read only memory (ROM), or the like). The processor 802 and the memory 804 are communicatively connected.

The computer 800 also may include a cooperating element 805. The cooperating element 805 may be a hardware device. The cooperating element 805 may be a process that can be loaded into the memory 804 and executed by the processor 802 to implement functions as discussed herein (in which case, for example, the cooperating element 805 (including associated data structures) can be stored on a non-transitory computer-readable storage medium, such as a storage device or other storage element (e.g., a magnetic drive, an optical drive, or the like)).

The computer 800 also may include one or more input/output devices 806. The input/output devices 806 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 800 of FIG. 8 may represent a general architecture and functionality suitable for implementing functional elements described herein, portions of functional elements described herein, or the like, as well as various combinations thereof. For example, computer 800 may provide a general architecture and functionality that is suitable for implementing all or part of one or more of a WAD 110, a WED 120, or the like.

It will be appreciated that at least some of the functions depicted and described herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits (ASIC), and/or any other hardware equivalents).

It will be appreciated that at least some of the functions discussed herein as software methods may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

Aspects of various embodiments are specified in the claims. Those and other aspects of various embodiments are specified in the following numbered clauses:

1. An apparatus, comprising:

a processor and a memory communicatively connected to the processor, the processor configured to:

receive, by a first wireless access device from a wireless end device associated with the first wireless access device, feedback information comprising information indicative of channel estimate information for a channel between the wireless end device and the first wireless access device and information indicative of channel estimate information for a channel between the wireless end device and a second wireless access device;

receive, by the first wireless access device from the second wireless access device, information indicative of a transmit sequence to be transmitted by the second wireless access device using a set of wireless resources;

determine, by the first wireless access device using a dirty paper coding scheme and based on the feedback information and the information indicative of the transmit sequence to be transmitted by the second wireless access device, a transmit sequence for transmission by the first wireless access device toward the wireless end device using the set of wireless resources; and

transmit the transmit sequence toward the wireless end device using the set of wireless resources.

2. The apparatus of clause 1, wherein the information indicative of the channel estimate information for the channel between the wireless end device and the first wireless access device comprises the channel estimate information for the channel between the wireless end device and the first wireless access device.

3. The apparatus of clause 2, wherein the channel estimate information for the channel between the wireless end device and the first wireless access device comprises a product of estimated channel information for the channel between the wireless end device and the first wireless access device and a filter vector of a receiver of the wireless end device.

4. The apparatus of clause 1, wherein the information indicative of the channel estimate information for the channel between the wireless end device and the first wireless access device comprises estimated channel information for the channel between the wireless end device and the first wireless access device and a filter vector of a receiver of the wireless end device.

5. The apparatus of clause 4, wherein the processor is configured to:

compute the channel estimate information for the channel between the wireless end device and the first wireless access device as a product of the estimated channel information for the channel between the wireless end device and the first wireless access device and the filter vector of the receiver of the wireless end device.

6. The apparatus of clause 1, wherein the feedback information further comprises a strength of a sum of noise and uncancelled interference at the wireless end device.

7. The apparatus of clause 1, wherein the processor is configured to:

send, from the first wireless access device toward the wireless end device based on a determination that the first wireless access device is scheduling a transmission to the wireless end device, a request for the wireless end device to provide the feedback information to the first wireless access device.

8. The apparatus of clause 1, wherein the information indicative of the transmit sequence to be transmitted by the second wireless access device using the set of wireless resources comprises the transmit sequence to be transmitted by the second wireless access device using the set of wireless resources.

9. The apparatus of clause 1, wherein the information indicative of the transmit sequence to be transmitted by the second wireless access device using the set of wireless resources comprises:

a set of raw information bits to be transmitted by the second wireless access device using the set of wireless resources; and
an indication of a Modulation and Coding Scheme (MCS) to be used by the second wireless access device to transmit the raw information bits using the set of wireless resources.

10. The apparatus of clause 9, wherein the processor is configured to:

determine the transmit sequence to be transmitted by the second wireless access device using the set of wireless resources based on the raw information bits to be transmitted by the second wireless access device using the set of wireless resources and the indication of the MCS to be used by the second wireless access device to transmit the raw information bits using the set of wireless resources.

11. The apparatus of clause 1, wherein the processor is configured to:

send, from the first wireless access device toward the second wireless access device, a request for the information indicative of the transmit sequence to be transmitted by the second wireless access device using the set of wireless resources.

12. The apparatus of clause 1, wherein the processor is configured to:

select the second wireless access device from a set of candidate wireless access devices.

13. The apparatus of clause 1, wherein the processor is configured to:

transmit the transmit sequence toward the wireless end device using the set of wireless resources.

14. The apparatus of clause 1, wherein the first wireless access device comprises a first type of wireless access device and the second wireless access device comprises a second type of wireless access device.

15. The apparatus of clause 14, wherein the first type of wireless access device comprises a metro cell device, wherein the second type of wireless access device comprises a macro cell device.

16. An apparatus, comprising:

a processor and a memory communicatively connected to the processor, the processor configured to:

determine, by a wireless end device connected to a first wireless access device, feedback information comprising information indicative of channel estimate information for a channel between the wireless end device and the first wireless access device and information indicative of channel estimate information for a channel between the wireless end device and a second wireless access device;
send the feedback information from the wireless end device toward the first wireless access device; and
receive, by the wireless end device from the first wireless access device, a wireless received sequence.

17. The apparatus of clause 16, wherein the first wireless access device is a first type of wireless access device and the second wireless access device is a second type of wireless access device.

18. The apparatus of clause 17, wherein the first type of wireless access device comprises a metro cell device, wherein the second type of wireless access device comprises a macro cell device.

19. The apparatus of clause 16, wherein the information indicative of the channel estimate information for the channel between the wireless end device and the first wireless access device comprises the channel estimate information for the channel between the wireless end device and the first wireless access device.

20. The apparatus of clause 19, wherein the channel estimate information for the channel between the wireless end device and the first wireless access device comprises a product of estimated channel information for the channel between the wireless end device and the first wireless access device and a filter vector of a receiver of the wireless end device.

21. The apparatus of clause 16, wherein the information indicative of the channel estimate information for the channel between the wireless end device and the first wireless access device comprises estimated channel information for the channel between the wireless end device and the first wireless access device and a filter vector of a receiver of the wireless end device.

22. The apparatus of clause 16, wherein the feedback information further comprises a strength of a sum of noise and uncancelled interference at the wireless end device.

23. The apparatus of clause 16, wherein the processor is configured to determine and send the feedback information based on an instruction for the wireless end device to determine and send feedback information to the first wireless access device.

24. An apparatus, comprising:

a processor and a memory communicatively connected to the processor, the processor configured to:

receive, at a first wireless access device from a second wireless access device, a request for information indicative of a transmit sequence to be transmitted by the first wireless access device using a set of wireless resources; and

send, from the first wireless access device toward the second wireless access device, a response including the information indicative of the transmit sequence to be transmitted by the first wireless access device using the set of wireless resources.

25. The apparatus of clause 24, wherein the information indicative of transmit sequence to be transmitted by first wireless access device using the set of wireless resources comprises the transmit sequence to be transmitted by the first wireless access device using the set of wireless resources.

26. The apparatus of clause 24, wherein the information indicative of transmit sequence to be transmitted by the first wireless access device using the set of wireless resources comprises a set of raw information bits to be transmitted by the first wireless access device and an indication of a modulation and coding scheme (MCS) to be used by the first wireless access device to transmit the raw information bits.

It will be appreciated that, although various embodiments which incorporate the teachings presented herein have been shown and described in detail herein, those skilled in the art can readily devise many other varied embodiments that still incorporate these teachings.

**Claims**

1. An apparatus, comprising:

a processor and a memory communicatively connected to the processor, the processor configured to:

receive, by a first wireless access device from a wireless end device associated with the first wireless access device, feedback information comprising information indicative of channel estimate information for a channel between the wireless end device and the first wireless access device and information indicative of channel estimate information for a channel between the wireless end device and a second wireless access device;

receive, by the first wireless access device from the second wireless access device, information indicative of a transmit sequence to be transmitted by the second wireless access device using a set of wireless resources;

determine, by the first wireless access device using a dirty paper coding scheme and based on the feedback information and the information indicative of the transmit sequence to be transmitted by the second wireless access device, a transmit sequence for transmission by the first wireless access device toward the wireless end device using the set of wireless resources; and
transmit the transmit sequence toward the wireless end device using the set of wireless resources.

2. The apparatus of claim 1, wherein the information indicative of the channel estimate information for the channel between the wireless end device and the first wireless access device comprises the channel estimate information for the channel between the wireless end device and the first wireless access device.

3. The apparatus of claim 1, wherein the information indicative of the channel estimate information for the channel between the wireless end device and the first wireless access device comprises estimated channel information for the channel between the wireless end device and the first wireless access device and a filter vector of a receiver of the wireless end device.

4. The apparatus of claim 1, wherein the processor is configured to:

send, from the first wireless access device toward the wireless end device based on a determination that the first wireless access device is scheduling a transmission to the wireless end device, a request for the wireless end device to provide the feedback information to the first wireless access device.

5. The apparatus of claim 1, wherein the information indicative of the transmit sequence to be transmitted by the second wireless access device using the set of wireless resources comprises the transmit sequence to be transmitted by the second wireless access device using the set of wireless resources.

6. The apparatus of claim 1, wherein the information indicative of the transmit sequence to be transmitted by the second wireless access device using the set of wireless resources comprises:

a set of raw information bits to be transmitted by the second wireless access device using the set of wireless resources; and
an indication of a Modulation and Coding Scheme (MCS) to be used by the second wireless access device to transmit the raw information bits using the set of wireless resources.

7. The apparatus of claim 6, wherein the processor is configured to:

determine the transmit sequence to be transmitted by the second wireless access device using the set of wireless resources based on the raw information bits to be transmitted by the second wireless access device using the set of wireless resources and the indication of the MCS to be used by the second wireless access device to transmit the raw information bits using the set of wireless resources.

8. The apparatus of claim 1, wherein the processor is configured to:

send, from the first wireless access device toward the second wireless access device, a request for the information indicative of the transmit sequence to be transmitted by the second wireless access device using the set of wireless resources.

9. An apparatus, comprising:

a processor and a memory communicatively connected to the processor, the processor configured to:

determine, by a wireless end device connected to a first wireless access device, feedback information comprising information indicative of channel estimate information for a channel between the wireless end device and the first wireless access device and information indicative of channel estimate information for a channel between the wireless end device and a second wireless access device;
send the feedback information from the wireless end device toward the first wireless access device; and
receive, by the wireless end device from the first wireless access device, a wireless received sequence.

10. The apparatus of claim 9, wherein the information indicative of the channel estimate information for the channel between the wireless end device and the first wireless access device comprises the channel estimate information for the channel between the wireless end device and the first wireless access device.

**11.** The apparatus of claim 10, wherein the channel estimate information for the channel between the wireless end device and the first wireless access device comprises a product of estimated channel information for the channel between the wireless end device and the first wireless access device and a filter vector of a receiver of the wireless end device.

**12.** The apparatus of claim 9, wherein the information indicative of the channel estimate information for the channel between the wireless end device and the first wireless access device comprises estimated channel information for the channel between the wireless end device and the first wireless access device and a filter vector of a receiver of the wireless end device.

**13.** The apparatus of claim 9, wherein the feedback information further comprises a strength of a sum of noise and uncancelled interference at the wireless end device.

**14.** The apparatus of claim 9, wherein the processor is configured to determine and send the feedback information based on an instruction for the wireless end device to determine and send feedback information to the first wireless access device.

**15.** An apparatus, comprising:

a processor and a memory communicatively connected to the processor, the processor configured to:

receive, at a first wireless access device from a second wireless access device, a request for information indicative of a transmit sequence to be transmitted by the first wireless access device using a set of wireless resources; and
send, from the first wireless access device toward the second wireless access device, a response including the information indicative of the transmit sequence to be transmitted by the first wireless access device using the set of wireless resources.

FIG. 1

100

WIRELESS ACCESS DEVICE
110-S

DPC
INTERFERENCE MITIGATION
ELEMENT
111-S

WIRELESS ACCESS DEVICE
110-L1

DPC
SUPPORT ELEMENT
112-L1

WIRELESS END DEVICE
120

DPC
SUPPORT ELEMENT
122

WIRELESS ACCESS DEVICE
110-L2

DPC
SUPPORT ELEMENT
112-L2

EP 3 316 501 A2

*FIG. 2*

*FIG. 3*A

TRANSMITTER 310

*FIG. 3*B

RECEIVER 320

FIG. 4

—————▶ DESIRED SIGNAL
—·—·—▶ STRONG INTERFERENCE
— — —▶ WEAK INTERFERENCE

*FIG. 5*

500

START 501

SMALL CELL WIRELESS ACCESS DEVICE RECEIVES, FROM A WIRELESS END DEVICE ASSOCIATED WITH THE SMALL CELL WIRELESS ACCESS DEVICE, FEEDBACK INFORMATION INCLUDING INFORMATION INDICATIVE OF CHANNEL ESTIMATE INFORMATION FOR A CHANNEL BETWEEN THE WIRELESS END DEVICE AND THE SMALL CELL WIRELESS DEVICE, INFORMATION INDICATIVE OF CHANNEL ESTIMATE INFORMATION FOR A CHANNEL BETWEEN THE WIRELESS END DEVICE AND THE LARGE CELL WIRELESS ACCESS DEVICE, AND A STRENGTH OF THE SUM OF NOISE AND UNCANCELLED INTERFERENCE AT THE WIRELESS END DEVICE
510

SMALL CELL WIRELESS ACCESS DEVICE RECEIVES, FROM THE LARGE CELL WIRELESS ACCESS DEVICE, INFORMATION INDICATIVE OF A TRANSMIT SEQUENCE TO BE TRANSMITTED BY THE LARGE CELL WIRELESS ACCESS DEVICE USING A SET OF WIRELESS RESOURCES
520

SMALL CELL WIRELESS ACCESS DEVICE DETERMINES, USING A DIRTY PAPER CODING SCHEME AND BASED ON THE FEEDBACK INFORMATION AND THE INFORMATION INDICATIVE OF THE TRANSMIT SEQUENCE TO BE TRANSMITTED BY THE LARGE CELL WIRELESS ACCESS DEVICE, A TRANSMIT SEQUENCE FOR TRANSMISSION BY THE SMALL CELL WIRELESS ACCESS DEVICE TOWARD THE WIRELESS END DEVICE USING THE SET OF WIRELESS RESOURCES
530

SMALL CELL WIRELESS ACCESS DEVICE TRANSMITS THE TRANSMIT SEQUENCE TOWARD THE WIRELESS END DEVICE USING THE SET OF WIRELESS RESOURCES
540

END 599

FIG. 6

600

601
START

610
WIRELESS END DEVICE DETERMINES FEEDBACK
INFORMATION INCLUDING INFORMATION INDICATIVE OF
CHANNEL ESTIMATE INFORMATION FOR A CHANNEL BETWEEN THE
WIRELESS END DEVICE AND A SMALL CELL WIRELESS ACCESS
DEVICE, INFORMATION INDICATIVE OF CHANNEL
ESTIMATE INFORMATION FOR A CHANNEL BETWEEN THE WIRELESS
END DEVICE AND A LARGE CELL WIRELESS ACCESS DEVICE, AND
A STRENGTH OF THE SUM OF NOISE AND UNCANCELLED
INTERFERENCE AT THE WIRELESS END DEVICE

620
WIRELESS END DEVICE SENDS THE FEEDBACK
INFORMATION FROM THE WIRELESS END DEVICE TOWARD
THE SMALL CELL WIRELESS ACCESS DEVICE

630
WIRELESS END DEVICE RECEIVES A WIRELESS RECEIVE
SEQUENCE FROM THE SMALL CELL WIRELESS ACCESS DEVICE

640
WIRELESS END DEVICE DECODES WIRELESS RECEIVE SEQUENCE

699
END

*FIG. 7*

700

START 701

LARGE CELL WIRELESS ACCESS DEVICE RECEIVES, FROM A SMALL CELL WIRELESS ACCESS DEVICE, A REQUEST FOR INFORMATION INDICATIVE OF A TRANSMIT SEQUENCE TO BE TRANSMITTED BY THE LARGE CELL WIRELESS ACCESS DEVICE USING A SET OF WIRELESS RESOURCES  710

LARGE CELL WIRELESS ACCESS DEVICE SENDS, TOWARD THE SMALL CELL WIRELESS ACCESS DEVICE, A RESPONSE INCLUDING THE INFORMATION INDICATIVE OF THE TRANSMIT SEQUENCE TO BE TRANSMITTED BY THE LARGE CELL WIRELESS ACCESS DEVICE USING THE SET OF WIRELESS RESOURCES  720

END 799

FIG. 8